# EUROPEAN PATENT SPECIFICATION

(11) **EP 2 663 531 B1**
(45) Date of publication and mention of the grant of the patent: **29.11.2023**
(21) Application number: 12707114.0
(22) Date of filing: 11.01.2012
(51) Int. Cl.: C02F 1/461, B01D 53/62, C02F 1/469, B01D 61/42, B01D 65/08, C02F 103/08

(54) **Electrochemical water processing method and unit with electrochemical conditioning cell**
Elektrochemisches Wasseraufbereitungsverfahren und Anlage mit elektrochemischer Konditionierungszelle
Procédé et unité de traitement électrochimique de l'eau avec cellule de conditionnement électrochimique

(30) Priority: 12.01.2011 GB 201100475
(43) Date of publication of application: 20.11.2013
(73) Proprietor: Future Environmental Technologies Ltd, Bristol BS20 7DF (GB)
(72) Inventor: HENDAWI, Adel, Bristol BS20 6NP (GB)
(74) Representative: Thurston, Joanna
(86) International application number: PCT/GB2012/050047
(87) International publication number: WO 2012/095659

(56) References cited:
- WO-A1-2007/015684
- WO-A1-2009/048685
- WO-A1-2010/042987
- WO-A1-2010/139114
- WO-A2-2009/039445
- GB-A- 2 267 290
- JP-A- 7 080 457
- JP-A- 10 076 269
- US-A1- 2010 150 803
- US-A1- 2010 200 419

## Description

### Field of invention

The invention relates to conditioning cells, in particular to conditioning cells for use with processing units and to methods for their use. The invention further relates to desalination and greenhouse gas (GHG) sequestration units and methods for use.

### Background to the Invention

In view of the ever increasing global population, and the resultant increase in water consumption for domestic, agricultural and industrial use, a solution to the problem of desalination of sea or other salt water for use as potable water is desirable. Similarly, a solution to the problem of reducing greenhouse gas emissions is actively sought.

Various methods have been proposed for the selective separation of carbon dioxide and/or other greenhouse gases followed by either storage or conversion to metal salts such as, for carbon dioxide, calcium carbonate. Such sequestration methods include carbon-capture and separation techniques (CCS).

Skyonic have developed a system in which greenhouse gases can be sequestered by reaction with sodium chloride and hydrochloric acid in water using a chlor-alkali cell. The products of the reaction are precipitated from solution and used in cement manufacturing or as bleaches.

Calera have developed a similar system using the electrodialysis of sea water in combination with fly ash, sodium hydroxide, softened water and alkaline metals. As with the Skyonic system, the products of the reaction are used in cement manufacture.

Ecospec Global Technology have developed a system for the treatment of water in an electromagnetic field (see WO 2007/015684). However, purification or GHG sequestration is not discussed.

Co-pending UK patent application number 1021701.6 filed on 22 December 2010 (WO2012085552 A1) in the name of Future Environmental Technologies Ltd, describes the application of these principles to fulfil an industry need for an alternative, desirably improved, processing unit which can be utilised in, for instance, desalination and/or GHG sequestration. The processing unit of UK patent application number 1021701.6 incorporates electrochemical separation principles, the subject invention relates to the provision of a conditioning cell which may additionally be present for the pre-treatment of water used in this processing unit.

The applicant has developed the processing unit in an attempt to overcome or ameliorate the problem of membrane and, to a lesser extent, electrode fouling in electrochemical and electrodialysis systems. This "fouling" is the process where solutes or particles deposit onto a cell membrane or electrode surface and/or into membrane pores degrading the membrane's performance. Membrane fouling cause severe current flow decline reducing product yields from the cell. Severe fouling may require intense chemical cleaning and/or membrane replacement, increasing operating costs.

Numerous patents and publications have sought to address the problem of membrane fouling. Solutions offered include pre-treatments such as microfiltration, EDR, physical, biological and chemical treatments. For instance, it is known that anion membranes containing benzene rings are highly prone to fouling and that the modification of such systems to include acrylic anion membranes reduces the biological fouling (Electrodialysis Treatment of Surface and Waste Waters by Robert P. Allison).

JP10 076269A and JP7 080457A disclose the electrolytic production of hydrogen and the arrangement of electrolytic cells in series.

The invention attempts to overcome or ameliorate the problem of membrane fouling, by applying electrochemical principles to provide an alternative, desirably improved, method of conditioning water.

### Summary of the Invention

According to a first aspect of the invention there is therefore provided a processing unit comprising: a conditioning cell for treating water containing organic media; an electrochemical separation cell; a cathodic reaction cell in fluid communication with the separation cell; and an anodic reaction cell in fluid communication with the separation cell; wherein the conditioning cell comprises: a cathodic compartment comprising a cathode; and an anodic compartment comprising an anode separated from the first cathodic compartment by a cation selective membrane; wherein in use, the anodic compartment comprises an acid, and the cathodic compartment comprises water, the water comprising organic media; wherein the separation cell is configured to receive an ion-containing first aqueous solution formed from water, which is first passed through the cathodic compartment of the conditioning cell; wherein the separation cell further comprises a cation and an anion selective membrane arranged proximal the cathode and the anode, each forming a permeable wall spanning the separation cell, so that only the ion to which the membrane is permeable may pass beyond that point within the cell; wherein allowing the passing of the cathodic and anodic products through their respective membranes as they are drawn towards the cathode and anode concentrates the products facilitating transfer to the cathodic and anodic reaction cells; and wherein in use the organic media is living or dead biological matter, characterised in that the processing unit further comprises means for applying a current across the conditioning cell for neutralising the negative charges of the biological matter using the hydrogen ions which migrate from the anodic compartment to the cathodic compartment of the conditioning cell, according to claim 1.

As used herein, the term "conditioning cell" is intended to refer to an electrochemical unit comprising an anode and a cathode which acts to improve the quality of water passed therethrough by reaction with organic media present in the water.

Scaling in electrodialysis cells is usually associated with cation membranes but anion membranes are prone to biological fouling, the electronegative biological ions or matter. Tissue, living or dead biological matter, plants grown or living things, processed or decomposed biotic material and bodily fluid usually contains oxygen, nitrogen or halogen ions which are hydrogen ion acceptors and can bond with the anion selective membrane active terminals reducing or eliminating the membrane selectivity and eventually reduce its ionic permeability clogging the membrane micro pores.

This invention is based on the fact that biological matters usually contain in overall general negative charge which is composed of the summation of its partially and or fully charged terminals.

Pretreatment or bombarding the biological matter in treated waste waters with an active flux of hydrogen ions will result in saturating to double bonds, neutralize and saturate aldehydes, amino and halogenated bonds and terminals, and so on. In other words neutralise the charge on the biological matter rendering them blind to the electrodialysis process and pass unseen through the electrodialysis cell.

The hydrogen flux will liberate complexed or masked metal ions within the bio matter.

Excessive charging with active hydrogen ions flux will inevitably result in increasing conductivity and turbidity due to cleavage of some molecular bonds and probably increase or elevate treated waste waters acidity.

At start of any trial the correct current density (H⁺ ions flux) has to be estimated. This can be carried out at the desired flow rate by monitoring the conditioned water outlet for:
1- Current increase (Amp) V treated water conductivity.
2- Current increase (Amp) V treated water (pH).

The required correct conditioning current density (H⁺ flux) is the current producing very small or no change in pH, conductivity and probably turbidity matching that of untreated water conductivity, pH and turbidity readings beyond which conductivity, turbidity starts to increase and pH decrease.

Often the acid will be a strong acid, although weak acids may also be used. The person skilled in the art would understand that through modification of the concentration of the acid the pH (concentration of dissociated hydronium ions) can be controlled to provide a cell with sufficient free cations to neutralise the organic media. In many instances the acid will be selected from hydrochloric, sulfuric and nitric acid, typically sulfuric acid will be used. Hydrogen ions are also produced by electrolysis of the aqueous solvent which forms the basis for the acidic solution.

The current will generally be a DC current, which may be applied for some or all of the time that the conditioning cell is in use. Typically the current will be continuously applied without variation as to voltage for substantially all of the time that the conditioning unit is in use. In many examples, the current applied will be in the range 0.1 - 5 Amp, often 0.5 - 2 or 3 Amps, in many cases 0.5 - 1 Amp with a voltage in the range 8 - 12 V, often 9 - 11 V, often around 10 - 10.5 V.

The conditioning cell had the advantage of significantly reducing, or even substantially eliminating the fouling of the membranes found in the processing unit with which the conditioning cell will often be used. Fouling of the membranes is typically by clogging of the pores by the organic media always present in natural water sources such as those often used with the processing unit. This clogging hinders or prevents passage of ions through the membrane and is often caused through abstraction of the hydrogens from the hydrogen terminated surfaces of the membrane by the negatively charged organic media. This has the physical effect of binding the organic media to the membrane, resulting in fouling. The conditioning cell described herein prevents such fouling from occurring by supplying hydrogen ions to the organic media before contact with the membranes, neutralising the negative charge. This has the result that the neutralised organic media do not interact with the membrane. An additional benefit is that the organic media do not migrate in response to exposure to a current, and as such pass through any electrochemical cell, including the separation cell or cathodic reaction cell of the processing unit, with substantially no interaction with the other components present in the cell, or with the electrodes.

Where this occurs, fouling of the electrode is typically by deposit of either organic media or ions onto the surface of the electrode preventing communication between the electrode and the ions in the aqueous solution in which the electrode is placed. These deposits reduce the efficiency of the electrode and hence of the electrochemical processes occurring in the processing unit. Typically, however, fouling of the membranes is a far greater problem in the field as membrane fouling generally occurs at a much faster rate than electrode fouling and is therefore often the reason why membrane containing electrochemical cells must be cleaned.

Membrane fouling may be reversible or irreversible. Whether fouling is reversible or irreversible depends upon the strength of the attraction between the membrane and the media deposited thereon.

Fouled membranes may be cleaned either physically, biologically or chemically. Physical cleaning includes water jets or back flushing. Biological cleaning may use biocides to remove micro organisms or chemical cleaning which will involve the use of suitable concentration of sodium chloride or acids and bases to remove source of fouling and impurities.

A drop in current flux or the increase in cell voltage is a strong indication of membrane fouling. The process of cleaning membrane fouling is usually associated with operating production delay as well as cost of cleaning material and labor.

The conditioning cell described herein helps to reduce or eliminates the fouling by neutralising the metal ions which cause scaling or the organic media. For instance, biological media includes electronegative ions or atoms. Tissue, living or dead biological matter, plants grown or living things, processed or decomposed biotic material and bodily fluid, all usually contain oxygen, nitrogen or fluorine ions which are hydrogen ion acceptors and can bond with the anion selective membrane active terminals reducing or eliminating the membrane selectivity and eventually clogging membrane micro pores. This is prevented by passing the water through the conditioning cell prior to entry to the processing unit described, in the conditioning cell the organic media is neutralised by cations released from the acid. The result of this neutralisation is that the organic media is not influenced by currents flowing in the processing unit, and will simply pass from the processing unit with the treated water at discharge. Should it be desirable at that time to remove the organic media from the water this can be achieved through simple filtration.

As used herein the term "organic media" is intended to include, and be used substantially interchangeably with terms such as "biological media", "organic matter" and "biological matter", and these terms are to be given their typical, well understood meaning in the art, namely to include all matter which is or once was living. For instance, tissue, living or dead biological matter, plants grown or living things, processed or decomposed biotic material, and bodily fluid all fall within the scope of this term. The term is also intended, for the purposes of this document to include organic media in whatever form it is present in the water, for instance in suspension, solution, as a colloid etc.

The conditioning cell described herein also has the benefit of reducing internal precipitation of salts throughout the processing unit and in particular in the separation cell. In many cases the salts will be magnesium and/or calcium salts.

Precipitation and fouling are generally more of a problem in the separation cell as this is one of the first cells into which the ion-containing water will pass. Fouling and precipitation can also occur in the other cells, including the cathodic cell which also generally receives ion-containing water, often from the same source as the water passed into the separation cell. The precipitation and fouling is generally reduced if not eliminated throughout the processing unit through the presence of a conditioning cell.

The substantial reduction, or elimination, in the levels of fouling, of the membranes found in the processing unit, in particular of the membranes found in the separation cell has the commercial advantage of significantly reducing maintenance downtime as the frequency of membrane cleaning is reduced. This allows the cells to be continuously used for far longer periods, and as such the incorporation of the conditioning cell described herein into the processing units described provides a processing unit which is more efficient than known systems of a similar type.

Scaling is usually associated with cation membranes. Anion membranes are prone to biological fouling.

Described herein is a processing unit comprising the conditioning cell also described herein. Also described herein is a processing unit comprising:
an electrochemical separation cell ("the separation cell) comprising an ion selective membrane, the separation cell being in fluid
communication with,
a cathodic reaction cell,
an anodic reaction cell, and
a conditioning cell as described in the first aspect of the invention;
wherein in use:
the separation cell comprises an ion-containing first aqueous solution,
the cathodic reaction cell comprises a second aqueous solution including the cathodic products of electrochemical separation of the first aqueous solution, and
the anodic reaction cell comprises a third aqueous solution including the anodic products of electrochemical separation of the first aqueous solution.

The conditioning cell described herein is compatible with systems for use in a wide variety of applications, including greenhouse gas sequestration, desalination and in the adjustment of pH. These are discussed below. It is an advantage of the invention that these applications may be used alone or in combination, and that the processing unit may be applied specifically to one particular application, but also derive the advantages of the other aspects of the invention.

Specific advantages of the processing unit, which may be derived depending upon the configuration of adopted for the unit, include:
- the need to use only starting materials which are available locally (e.g. sea water). This is not the case for known processing units, at least where they are in use as desalination or GHG sequestration systems. In such systems it is typically the case that starting materials must be transported to the site of remediation, increasing the environmental impact of these prior art systems;
- no heavy chemicals are required, reducing the monitoring necessary in use and the authorisations necessary to begin using the processing units;
- the potential to produce a range of useful products using the processing units. These include, potable water, chlorine gas, sulfuric acid, hydrogen, hypochlorite bleach, nitrogen gas, oxygen gas, and a range of salts;
- desalination and GHG sequestration applications;
- the ability to control the pH of the solutions released from the processing unit, so that these will be environmentally benign, and potentially beneficial to the environment;
- a reduction in servicing and repair down-time compared to known processing units by virtue of the presence of the conditioning unit of the invention; and
- the products of the cathodic reaction cell, in particular, are non-toxic and can be released into the environment without causing harm if desired.

The processing unit of may often be formed, for instance, from cation and anion resin cells, or from different compartments in fluid communication with one another.

Also described herein is a processing unit additionally comprising the conditioning cell described herein, the conditioning cell being in fluid communication with the separation cell and in some examples the cathodic reaction cell. Accordingly, the conditioning cell may be used to pre-treat either or both of the water which will enter the separation cell and form the first aqueous solution, or the water which will enter the cathodic reaction cell and form the second aqueous solution. In some examples a single conditioning cell may be used to treat the water which will form the first and the second aqueous solution, in other examples there may be two or more conditioning cells which may be arranged in parallel so that the water passes through a plurality of cells prior to entering the separation cell and/or cathodic reaction cell, or in series so that the water which will form the first aqueous solution may be pre-treated in a different conditioning cell from the water which will form the second aqueous solution.

Although both the water forming the first aqueous solution and the water forming the second aqueous solution may be pre-treated in the conditioning cell, it will sometimes be the case that only one water stream is treated. In such cases it will be the stream entering the separation cell, also referred to as the "main stream". In many instances, where the stream of water entering the cathodic reaction cell is not passed through the conditioning cell, it will be filtered, although this is desirable to prevent clogging of the cell and hence to reduce operational downtime for maintenance purposes, it is not essential. This stream of water is also referred to as the "secondary stream".

As noted above, the treatment of the main stream prior to entry into the electrochemical separation cell helps to prevent fouling of the cell (e.g. by fouling of the membranes), for instance by organic or biological media, which may be removed by the conditioning cell as described, or thorough salt precipitation which can be prevented through use of the conditioning cell. In particular, it will often be desirable that the separation cell include one or more ion selective membranes, often there will be at least two ion selective membranes, often a cation and anion selective membranes. The fouling of these membranes can be reduced or prevented by passing the main stream through the conditioning cell prior to electrochemical separation in the separation cell. Often, use of the conditioning cell described herein will be particularly effective in preventing fouling of anion selective membranes.

The membranes will each form a permeable wall spanning the separation cell, so that only the ion to which the membrane is permeable may pass beyond that point within the cell. The membranes will be arranged with the cation selective membrane proximal the cathode and the anion selective membrane proximal the anode. Such an arrangement helps to ensure that the cathodic and anodic products of electrolysis do not recombine. In addition, the passing of the cathodic and anodic products through their respective membranes as they are drawn towards the cathode and anode helps to concentrate the products facilitating transfer to the cathodic and anodic reaction cells.

In addition, in order to help facilitate this transfer, the fluid communication between the separation cell and the cathodic and anodic reaction cells is often unidirectional from the separation cell to the cathodic and anodic reaction cells. This prevents any back transfer of the cathodic and anodic reaction products to the separation cell once they have been produced and provides for the possibility of a continuous flow system. The unidirectional flow will be achieved using one of the many methods known in the art including the integration of one way valves or pumps into the unit.

In use, three aqueous solutions are formed in the processing unit. A first aqueous solution in the separation cell, a second aqueous solution in the cathodic reaction cell and a third aqueous solution in the anodic reaction cell. These may be formed from the same or different water sources, or "streams". It is one of the advantages of the processing unit that GHG sequestration and desalination can be achieved using only a source of water, the processing unit, and electrochemistry, without the need for additional reactants. For instance, many known methods require the addition of alkaline metals, or fly ash and will only work effectively if soft water is used. Not only does the process not require such components, but it is tolerant to waters of different hardness. In addition, no heating component is needed in the processing unit described herein, as it is based upon electrochemical techniques. Many known methods for, in particular, carbon capture, require heating in order for carbon sequestration to occur.

In many cases, the first and second aqueous solutions are formed from water from the same source. It is desirable that the water source or sources used for the first and second aqueous solutions contain ions, and hence sea, river or domestic tap water are all appropriate for use. In many cases, particularly for desalination applications, the source of the main and secondary streams of water and hence the first and second aqueous solutions will independently be sea water.

Where the water forming the main and secondary streams is from the same source, and a tertiary stream from an alternative water source, typically 60 - 80% of the water will form the main stream, often 65 - 75%. The remaining water, 20 - 40%, often 25 - 35% will form the secondary stream.

The water in a tertiary stream, namely the water forming the third aqueous solution in the anodic reaction chamber, desirably contains fewer ions than the main and secondary streams. As a result, although the tertiary stream may be from the same source as the main and secondary streams, it will typically be from a different source, often purified water. Purified water may be water prepared by including distillation, reverse osmosis, carbon filtration, microfiltration, ultrafiltration, ultraviolet oxidation or even electrodialysis. Deionised or distilled water, are particularly preferred, deionised being most often used for reasons of economics. As used herein, the term "purified water" is typically intended to mean waters with a conductivity of less than or equal to 10 µS·cm⁻¹ at 25°C, often 5 µS·cm⁻¹. In some examples of the invention the third aqueous solution is acidified, often with sulfuric acid. Such acidification can help to neutralise the anodic products of separation.

The ions of the first and/or second aqueous solutions may be any ions commonly found in water, however, they will often be selected from ions found in sea water and/or solubilised GHG. This is particularly the case where the water source for the main and secondary streams is sea water, and/or where the processing unit is being used in GHG sequestration applications. The ions will be a combination of anions and cations, the cations will include those of the alkali and alkaline earth metals and the anions will include acidic components. The ions may be, for instance, selected from sodium, potassium, iron, calcium, magnesium, phosphorus, cyanide, carbonate, chloride, sulfate, sulfite, nitrate, and nitrite. Often, sodium, potassium, calcium, magnesium, chloride, sulfate and nitrate. The concentration of ions will depend upon the water source(s) chosen.

Depending upon the ions present in the water forming the first aqueous solution, the cathodic products of electrochemical separation may include calcium, sodium, magnesium and phosphorus; the anodic products of electrochemical separation may include chloride and sulfate.

As can be seen, a range of parameters must be controlled, such a flow rates, current, collection rates etc. In addition, indicators such as pH and ion concentration must also be monitored, to provide the information necessary to determine whether the system inputs, such as flow rate or current, must be changed. Monitoring of the processing unit is within the remit of the person skilled in the art and may be carried out manually or by computer.

The physical dimensions of the processing unit may be varied as appropriate for application. However, in many cases, the separation cell will be slightly larger than the anodic and cathodic reaction cells, and the conditioning cell which will typically, although not essentially, be the same size as one another. Sample volumes include, for the separation cells, a total volume in the range 2-20 litres, often 5-15 or 5-10 litres in some embodiments 6-8 litres, often around 7 litres. For the anodic and cathodic reaction cells these may independently have volumes in the range 1-15 litres, often 2-10 litres in some examples 4-7 litres or 5-6 litres each. The skilled person would be able to identify appropriate height, width and depth dimensions in order to achieve compartments with these volumes. It will often be the case that each cell (the separation cell, cathodic reaction cell, and anodic reaction cell, will independently have an active surface area (i.e. an area on which reaction can occur) independently in the range 0.1-2 m², often 0.5-1.5 m², often 0.8-1.2 m² and in many examples of the invention around 1 m².

Also described herein is a desalination unit comprising:
a conditioning cell according to the first aspect of the invention in unidirectional fluid communication with,
an electrochemical separation cell comprising cation and anion selective membranes, the separation cell being in unidirectional fluid communication with,
a cathodic reaction cell, and
an anodic reaction cell;
wherein in use:
the separation cell comprises a first aqueous solution including conditioned sea water,
the cathodic reaction cell comprises a second aqueous solution including the cathodic products of electrochemical separation of the conditioned sea water, and sea water, and
the anodic reaction cell comprises a third aqueous solution including
   the anodic products of electrochemical separation of the conditioned sea water, and deionised water.

When used in desalination, the processing unit has the potential to produce brackish or potable water dependent upon the current applied to the first aqueous solution. The separation of the ions from this solution, and their migration to the cathodic and anodic reaction cells leaves a first aqueous solution which has a reduced ion content, or may even have been effectively "deionised". The desalination unit may therefore be used in arid coastal regions to produce potable water for use in irrigation or as drinking water.

As used herein, the term "brackish" is intended to refer to water containing between 0.5 and 30 g/L of salts. Sea water would typically contain around 35 g/L of salts and water for human consumption typically up to a maximum of 2500 µS/cm of salts (approximately 1,700 parts per million). Potable water is generally regarded as having the following desired and permitted maximum concentrations of magnesium calcium chloride and sulphate.

| Substance | Desired Maximum Concentration in mg/L | Permitted Maximum Concentration in mg/L |
|---|---|---|
| Total dissolved solids | 500 | 1500 |
| Magnesium | 30 | 150 |
| Calcium | 75 | 200 |
| Chloride | 20 | 60 |
| Sulphate | 200 | 400 |

The processing unit described herein is appropriate to produce brackish or potable water as defined.

Also described herein is a greenhouse gas sequestration unit comprising:
a conditioning cell as described herein in unidirectional fluid communication with,
an electrochemical separation cell comprising cation and anion selective membranes, the separation cell being in unidirectional fluid communication with,
a cathodic reaction cell, and
an anodic reaction cell;
wherein in use:
the separation cell comprises an ion-containing first aqueous solution,
the cathodic reaction cell comprises a second aqueous solution
   including the cathodic products of electrochemical separation of the first aqueous solution and micronised greenhouse gases, and
the anodic reaction cell comprises a third aqueous solution including
   the anodic products of electrochemical separation of the first aqueous solution.

The basic principle of the GHG sequestration unit is to provide a unit which can use an electrochemical process to prepare and convert ion-containing aqueous solutions, such as sea water, to act as long term carriers of green house gases. The units described herein have been found to sequester up to 50 tonnes of GHG per day, around 1600 tonnes per annum.

The units provide a solution to GHG sequestration that differs from other ocean based CCS approaches in that it can be used to remediate the GHG at the source of the emissions using simple starting materials such as brackish or sea water. The unit can then be used to neutralise the GHG by combining them to form salts such as carbonates, bicarbonates, sulphate and nitrogen compounds before, if desired, returning the products harmlessly back to the environment. For instance, in sea water based processes the sea water and products of sequestration may be returned to the sea. In many instances, it is sea water that is used as it contains an appropriate selection of minerals for the electrochemical process and removes the need for any further chemical additives.

It has been found that the products of sequestration produced are particularly stable, when they are released into the sea the carbonates, bicarbonates, sulfurous and nitrous salts act to rebalance the salt content of the sea as the carbonated salts slowly precipitate out and settle on the sea floor. This can be beneficial to flora and fauna.

Also described herein is a method of water conditioning comprising the steps of:
(a) providing a conditioning cell as described herein;
(b) applying a current across the cell; and
(c) neutralising organic media using cations which migrate from the anodic compartment to the cathodic compartment
(d) conditioning an ion-containing first aqueous solution,
(e) providing the first aqueous solution in an electrochemical separation cell,
(f) separating the ions into cathodic and anodic products using electrolysis,
(g) transferring the cathodic products to the cathodic reaction cell and the anodic products to the anodic reaction cell,
(h) contacting the cathodic products of electrochemical separation of the first aqueous solution with water to form a second aqueous solution and salts of the cathodic products,
(i) contacting the anodic products of electrochemical separation of the first aqueous solution with water to form a third aqueous solution,
(j) releasing the treated first aqueous solution from the processing unit,
(k) releasing the second aqueous solution and salts of the cathodic products from the processing unit, and
(l) releasing the third aqueous solution from the processing unit.

In such methods, the conditioning cell will typically neutralise the organic and biological media from the water thus preventing fouling of the membranes found in the processing unit, in particular those found in the separation cell. The cell will also prevent precipitation of salts, in particular of calcium and magnesium salts, which can foul both the membranes present in the processing unit of the invention. In many cases the current will be DC current and the cations will be hydrogen ions.

Also described herein is the use of a processing unit as described herein in desalination and/or greenhouse gas sequestration.

In view of the above method it is clear that the processing units incorporating the inventive conditioning cells may be used in continuous flow or batch processes as it is possible to offer a continuous flow of water to provide for the first, second and third aqueous solutions; so that the products of the separation, cathodic reaction, and anodic reaction cells may all be continuously discharged in a flow process. Alternatively, a batch process may be preferred, with periodic discharge of products and refilling of the unit with fresh materials to be processed. In many instances, a continuous flow configuration will be adopted.

Once separation, and transfer of the cathodic and anodic products to the cathodic and anodic reaction cells has occurred, the level of ions in the first aqueous solution will be significantly reduced. As such, the first aqueous solution may be released from the processing unit as potable or brackish water. It is possible to control the level of separation and hence removal of ions from the first aqueous solution by controlling the current (DC current) applied to the electrochemical cell. As such, if potable water is required, a greater current can be applied to the separation cell, and more ions removed. The ability to control the product of the separation cell provides for the use of the invention in desalination applications, where potable water can be produced from otherwise undrinkable water sources. However, even where near total removal of ions from the first aqueous solution is required, the currents needed to produce this result are low in comparison to other electrochemical ion separation techniques. Typically, the currents used would be in the range 5-30 Amps, often 10 - 25 Amps, or 15 - 25 Amps.

Some examples of the electrochemical reactions which may occur in the electrochemical separation cell include:

### Cathode:

Na⁺ + 1e⁻ → Na + H₂O → NaOH + ½ H₂

Mg²⁺ + 2e⁻ → Mg + 2H₂O → Mg(OH)₂ + H₂

Ca²⁺ + 2e⁻ → Ca + 2H₂O → Ca(OH)₂ + H₂

K⁺ + 1e⁻ → K + H₂O → KOH + ½ H₂

### Anode:

| | |
|---|---|
| In acid media: | SO₄²⁻ - 2e⁻ + H₂O → H₂SO₄ + ½ O₂ |
| In acid media: | 2Cl⁻ - 2e⁻ + [H₂SO₄] → Cl₂ |
| In alkaline media: | Cl₂ + 2 NaOH → NaCl + NaOCl + H₂O |

As can be seen from the reaction scheme above, sodium hypochlorite is one of the possible products of the reaction of the chlorine gas, and represents another potentially useful product of the process of the invention, that, if desired, can be collected and used. The sodium hypochlorite may be a simple by-product of reaction or the system parameters may be configured, as would be known by the person skilled in the art, specifically to produce this product whether for use at the site of the processing unit, or sale.

It may be desirable to filter the water released from the separation cell to remove organic and/or biological media. This may improve the suitability of the water for, for instance, potable uses. If a filtration step is required, known techniques will be used, such as carbon filtration.

The cathodic products of reaction may be neutralised in the cathodic reaction cell or proximal to the cathode in the electrochemical separation cell. Often neutralisation will occur proximal to, or at, the cathode of the separation cell.

The method of water processing may also include the additional step of contacting greenhouse gases with water to form the second aqueous solution. Contacting may often occur in the cathodic reaction cell or proximal to the cathode in the electrochemical separation cell, by proximal is often meant in the part of the separation cell between the cathode and the cation selective membrane.

Where this additional component is present the salts formed in the cathodic reaction cell will be salts of the cathodic products of separation of the first aqueous solution and salts of the cations and anions formed by dissolution of the green house gases. Ions formed from the dissolution of the greenhouse gases may also be present in the second aqueous solution. Where this step is present, the gas processing is greenhouse gas sequestration. As can be seen, greenhouse gas processing may be carried out in conjunction with desalination of the water from the main and/or secondary stream. Alternatively, the main and/or secondary stream may not be sea water, in which case, the method as described herein becomes a greenhouse gas sequestration technique.

In some examples the greenhouse gases will be micronised. Typically micronisation will be prior to contact with water. As used herein the term "micronised" is intended mean that the gas stream is treated provide gas bubbles which are only a few microns in diameter, for instance less than 5 µM in diameter, possibly in the range 1 - 5 µM, or 1 - 3 µM. Alternatively, the gas bubbles may be of the nanometer scale, for instance of size in the range 200 nm - 1000 nm, on occasion 400 nm - 800 nm, in some instances 500 nm - 700 nm.

Micronisation will typically occur in the cathodic reaction cell, to ensure that the gas bubbles do not have the opportunity to coalesce prior to dissolution into the second aqueous solution and salt formation. However, micronisation may be applied to the GHG at any point prior to dissolution. Micronisation of the GHG is generally desirable as the larger surface area of gas available for reaction increases reaction and solubilisation times. It has been found that micronisation of the GHG can improve the absorption of the gases into the second aqueous solution and subsequent reaction by nearly 20%, in terms of GHG reaction within the vessel and hence GHG which is not lost to the environment.

The term "greenhouse gas" or "GHG" is generally well understood to mean any gas that when present in the atmosphere absorbs and emits radiation, particularly in the thermal infra red range. Such gases include water vapour, carbon dioxide, methane, oxides of sulfur (such as SOₓ) and oxides of nitrogen (such as NOₓ). The method as described herein is particularly intended for use with GHG's of the type emitted from power stations, particularly fossil fuel burning power stations, and by heavy industry. Such GHG's will often include carbon monoxide, carbon dioxide, SOₓ, N₂O and NOₓ. The SOₓ may often be selected from one or more of sulfur monoxide, sulfur dioxide and sulfur trioxide. The NOₓ may often be selected from one or more of nitric oxide and nitrogen dioxide.

In some examples, the salts of the cathodic products include the carbonates, hydrogen carbonates, chlorides, sulfates and/or hydrates of metals selected from sodium, calcium, potassium and magnesium. The salts present will be dependent upon the ions present in the first aqueous solution and formed by dissolution of the GHG's if present. The ions to be found in the first aqueous solution are in turn dependent upon the source of water selected for the main stream. Typically, where the main stream is sea water, the salts of the cathodic products will be as described above. Often the salts produced will include carbonates such as sodium or calcium carbonate; hydrogen carbonates such as sodium hydrogen carbonate; and sulfates such as sodium or potassium sulfate. Where GHG sequestration forms part of the inventive method, acids such as carbonic acid may also be present.

At the cathode of the separation cell, or in the cathodic reaction cell, the salts of the cathodic products of separation (and optionally the GHG's) are generally produced in a two stage process. In a first stage the cathodic products of separation (and optionally the GHG's) dissolve to form acidic compounds such as carbonic acid, sulfur and nitrogen containing acid compounds. A current may then be applied in this cell to facilitate the formation of salts. For instance, for the cases of carbon dioxide sequestration, the reaction mechanism would be:
1- CO₂ + H₂O (from the second aqueous solution) 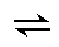 H₂CO₃ (aq)
2- H₂CO₃ + 2Ca²⁻ 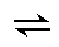 CaCO₃ + Ca(HCO₃)₂ + 2H₂O at pH< 10.25 (soluble) or
   H₂CO₃ + Ca²⁻ → CaCO₃ + H₂ at pH>10.25 (insoluble)

When the ratio of MCO₃/MHCO₃ is equal to an average of 0.81 at the stated pH range, Calcium and Magnesium Carbonate (i.e. M = Ca or Mg) will generally remain soluble in solution.

For sulfur dioxide sequestration salt formation would often be in accordance with the equation below:
1- SO₂ + H₂O → H₂SO₃ (aq)
2- SO₃²⁻(aq) + H₂O → SO₄²⁻(aq) + 2H⁺(aq) + 2e⁻
3- H₂SO₃+ catalyst [e.g. NO₂] + 2NaOH → Na₂SO₄ + 2H₂O

When the MSO₄ concentration in the cathodic reaction cell/second aqueous solution is equal to or less than 2.4kg/m³ of water at a temperature of 20 °C or more, it has been observed that

CaSO₄ (i.e. where M = Ca) will generally remain soluble in solution. For cooler water, the solubility factor has to be considered.

Where the current applied to the separation cell and the rate of addition of the GHG to the cathodic reaction cell are optimal, a neutral media of including compounds selected from carbonates, bicarbonates, sulphates and nitrogen stable salts will be produced and the pH will be approximately 7.

In some examples, the nitrogen containing compounds, in particular the NOₓ, will be reduced and destroyed by processes similar to those described in US patent number 5,306,400 to Bradtec Ltd. Conversion will typically be to water, nitrogen and oxygen as described in US patent number 3,542,657. An illustrative process, describing the destruction of nitrates in bipolar cells is shown below:
- Stage 1: At the cathode of the cathodic reaction cell, the nitrate is reduced to ammonia:

   HNO₃ + 8e⁻ + 8H⁺ → NH₃ + 3H₂O
- Stage 2: At the anode of the cathodic reaction cell, ammonia is oxidized to nitrogen either directly:

   2NH₃ → N₂ + 6H⁺ + 6e⁻

At lower pH the nitrate destruction process is relatively very slow, allowing the reduction of NOx to nitrogen and oxygen to occur. Often, in prior described processes, strong sodium hydroxide is present, forcing a fast reaction and the production of some ammonia. This was not the case in this system.

As such, the nitrogen containing GHG's and, in some instances, cathodic products of separation, may be converted not to salts, but instead to gases (nitrogen or oxygen) and/or to water. The gases will be released from the cell and may be collected, dried and purified as appropriate for their intended use. As both nitrogen and oxygen gas are valuable commercial products, these will often be utilised by the user of the processing unit or sold.

Where the nitrogen containing compounds are not destroyed, for instance where nitrates are not formed, typical reactions in the cathodic reaction cell include:
1- 2NO + O₂ → 2NO₂
2- 3NO₂ + H₂O → NO + 2HNO₃

Typically the salts released will be in soluble form, in particular where the salts are carbonates and hydrogen carbonates. For release in soluble form, the salts will be water soluble, and the discharge of the salts of the cathodic products and optionally GHG's will be with the water forming the second aqueous solution resulting in the discharge of a salt containing solution from the cathodic reaction cell. In particular, magnesium and calcium carbonates will typically remain in solution, without precipitation occurring.

The cation and anion balance in the cathodic reaction cell is complex, and it is desirable where possible to form a neutral salt-containing solution for discharge. However, whether neutralisation occurs depends upon, for instance, the concentration of positive and negative ions in the water forming the second aqueous solution; the concentration of cations transferred from the separation cell (which itself depends upon the concentration of ions in the first aqueous solution and the current applied); and the concentration of ions from the GHG present.

For this reason, it is of particular advantage to be able to control the concentration of cations being transferred from the separation cell, as such control can act as a method for controlling the pH of the second aqueous solution which at the time of release from the cathodic reaction cell is advantageously of a similar pH to the water body into which the second aqueous solution will be discharged. This pH can be controlled, in part, by controlling the current applied to the separation cell.

In addition, where the pH of the second aqueous solution is too high, hydrogen ions can be produced in the cathodic reaction chamber, by reaction of alkaline metal cations present in solution with water, providing a further method of controlling the pH of this solution. Further, the production of hydrogen ions, and hence hydrogen gas can offer a route to a commercially useful by-product, which may be used either on site by the user of the processing unit, or sold to generate revenue offsetting running and installation costs, for instance, hydrogen gas can be reacted with chlorine gas to produce hydrochloric acid, or used to power hydrogen cells producing electricity.

Another method of controlling the pH includes controlling the concentration of GHG being dissolved in the second aqueous solution. This can be controlled either by modification to the volume of water entering the cathodic reaction cell via the secondary stream, or to the amount of GHG being introduced to the cell.

Using the above methods, the products of the cathodic reaction chamber can be controlled, ensuring that the product released from the chamber comply with local environmental agency regulations.

In the case of a variable current being applied across the separation cell, and a fixed GHG feed rate: at higher current densities more alkaline ions will generally be present in the cathodic reaction cell, resulting in a higher pH. Conversely, at a lower current density more acidic ions will generally be present in the cathodic reaction cell, resulting in a lower pH.

In the case of a fixed current being applied across the separation cell, and a variable GHG feed rate: at higher GHG feed rate more acidic ions will generally be present in the cathodic reaction cell, resulting in a lower pH. At a lower feed rate more alkaline ions will generally be present in the cathodic reaction cell, resulting in a higher pH.

In some examples, the release of the second aqueous solution and salts of the cathodic products (with or without the salts of the dissolution of GHG's), from the processing unit will be to the sea. This is often preferred if the sea is proximal to the treatment site. In such instances, it is advantageous if the pH of the second aqueous solution be in the range 7.5 - 8.5, in some instances in the range 8.0, 8.2 or 8.35 - 8.45 (i.e. around the pH of sea water). Alternatively, release may be into another water body, such as a lake or river, or further treatment may be applied to the products released from the cathodic reaction cell. Such further treatment may include, for instance, reclaiming of the salts for further utilisation or sale, leaving potable or brackish water for discharge.

The ability to control the pH of the solutions released from the processing unit represents a key difference between the processing unit and the prior art, as prior art methods for GHG sequestration in particular often produce highly alkaline solutions, of pH 9 or more, the ability to ensure that the pH of the solutions released from the processing unit is similar to the water body into which it is being released significantly reduces the environmental impact of the release of these products.

Discharge of the second aqueous solution including the salts of the cathodic products and optionally GHG sequestration is not only environmentally benign, but can also have a positive benefit on the flora and fauna of the surrounding water bodies, as the salts can offer beneficial nutrients, and the solution as a whole can be applied to help balance the pH of the water body, for instance where this has fallen too low as a result of pollution. In such instances, the pH of the second aqueous solution could be controlled to help restore the pH of the water body back to a more "natural" pH, helping to undo the damage caused by pollution, having a positive impact upon the environment.

The anodic products of electrochemical separation of the first aqueous solution will often include chloride or sulfate, although other negatively charged ions may also be present. Where chloride is present, this will often form chlorine gas at the anode of the electrochemical separation cell. This will then typically be transferred to the anodic reaction cell and "released" from the processing unit in this form. The chlorine gas will typically be collected and after any purification or drying that is necessary may be used either on site by the user of the inventive method, or sold for third party use.

Sulfates may be neutralised on the anode of the separation cell, or in the anodic reaction cell. After transfer to the anodic reaction cell any remaining sulfate anions are converted into sulfuric acid and released from the processing unit in this form. Conversion to sulfuric acid in the anodic reaction cell is optionally facilitated by acidification of the third aqueous solution, generally acidification will be with sulfuric acid.

The concentration of the sulfuric acid produced may be controlled by adjusting the volume of the third aqueous solution, or in other words the amount of the tertiary stream passed into the anodic reaction cell. The concentration of the sulfuric acid may be further modified after it has been released from the processing unit by, for instance, distillation or evaporation. Where the processing unit is situated at a power station or heavy industrial plant, waste hot water or other heat source could be used to provide the heat necessary to achieve this additional concentration. Further, the evaporate/distillate could be reused as the water for the tertiary stream/third aqueous solution; thereby further improving the efficiency of the system.

Where produced, the concentrated sulfuric acid may be used to dry the chlorine, improving the quality of this product for resale. The sulfuric acid may then be used, as with the chlorine gas, by the user of the method or sold for third party use. In particular, the sulfuric acid may be used in the conditioning cell described herein.

As such, the chlorine and sulfuric acid may be regarded as useful commercial by-products of the separation of the first aqueous solution. This is particularly as the processing unit produces chlorine gas and sulfuric acid at purities comparable to many commercial sources of these products.

Alternatively, it may be that the method is specifically applied in order to generate these products; for instance, it may be desirable to apply the inventive method at the manufacturing site of a chlorine or sulfuric acid intensive process. If, for instance, sea water were readily available at such a site, and could form the first aqueous solution, this would provide a low cost method of producing the components of the chemical process. Such a process has a particular advantage that the by-products of chlorine gas or sulfuric acid production (water, non-toxic salts) can be released into the environment without employing expensive disposal methods. In addition, the starting materials for the process are produced on-site, reducing the overall environmental impact of the chemical process by removing the need to transport starting materials to the site, and hence the carbon-impact of the process overall.

Also described herein is a desalination method comprising the steps of:
(a) conditioning sea water using the method described herein,
(b) providing the conditioned sea water to an electrochemical separation cell,
(c) separating the conditioned sea water into cathodic and anodic products using electrolysis,
(d) transferring the cathodic products to the cathodic reaction cell and the anodic products to the anodic reaction cell,
(e) contacting the cathodic products of electrochemical separation of the conditioned sea water with sea water to form a second aqueous solution and salts of the cathodic products,
(f) contacting the anodic products of electrochemical separation of the first aqueous solution with deionised water to form a third aqueous solution,
(g) releasing the electrolysed conditioned sea water from the processing unit as brackish or potable water,
(h) releasing the second aqueous solution and salts of the cathodic products from the processing unit, and
(i) releasing the third aqueous solution from the processing unit.

This method has the advantage that the products of desalination may be collected, becoming a commercial commodity. Alternatively, where they are not collected, the products are non-toxic and may be safely returned to the sea without harm to the environment. For instance, the desalination method described herein will often produce chlorine gas and sulfuric acid, as chlorides and sulfurous compounds are extracted from the first aqueous solution as anodic products of separation. These products may be collected and sold, helping to offset the costs of installing and running the desalination unit. In addition, the salts formed in the cathodic reaction cell may be collected and sold if desired, alternatively, as they are non-toxic and do not harm the environment they may simply be discharged from the processing unit.

Also described herein is a method of greenhouse gas sequestration comprising the steps of:
(a) conditioning water using the method described herein,
(b) providing an ion-containing first aqueous solution in an electrochemical separation cell,
(c) separating the ions into cathodic and anodic products using electrolysis,
(d) transferring the cathodic products to the cathodic reaction cell and the anodic products to the anodic reaction cell,
(e) contacting micronised greenhouse gases and the cathodic products of electrochemical separation of the first aqueous solution with water to form a second aqueous solution and salts of the cathodic products,
(f) contacting the anodic products of electrochemical separation of the first aqueous solution with water to form a third aqueous solution,
(g) releasing the treated first aqueous solution from the processing unit,
(h) releasing the second aqueous solution and salts of the greenhouse gases and cathodic products from the processing unit, and
(i) releasing the third aqueous solution from the processing unit.

Such a method, and the methods described above, has the advantage that it may be applied at the site of GHG emission, for instance, the processing unit may be installed at the site of the power station and used to capture the flue gases emitted. The GHG's are therefore sequestered at source. In addition, the products of sequestration are non-toxic salts which may be safely released from the processing unit into a local water body without environmental concern. Further, use of the inventive method, will produce useful by-products, as described above, which may be collected and sold, offsetting the cost of installing and running the processing unit.

Also described herein is the use of a method described herein in one or more applications selected from desalination and greenhouse gas sequestration.

The processing units incorporating the inventive conditioning cell offer a wide range of advantages, many of which have been illustrated above; however, one key advantage is the ability to utilise materials which are at hand, removing the need to transport materials to the site of operation, hence reducing the overall cost of operation of the processing units, and the environmental impact of the units/process in terms of carbon footprint. For instance, It is known to use commercial alkaline metal salts as a source to stabilise the end products of sequestration. However, in other CCS techniques, this may involve purchase, transport, storage and handling of such materials. This is not required by the invention as the stabilisation materials are generated in situ. For instance, seawater may be used as a source of the required cations and at the same time produce valuable by-products which can offset or cover the running cost of the unit, offering a commercially important way of recouping both running and installation costs.

Optionally, the system may be controlled by computer, programmed to monitor conditions such as pH, temperature and electrolyte concentration in each of the electrochemical separation cell, the cathodic reaction cell and the anodic reaction cell and adjust the currents flowing through the system, and feed rates of each of the main, secondary and tertiary streams, any GHG addition and other factors as appropriate.

Unless otherwise stated each of the integers described in the invention may be used in combination with any other integer as would be understood by the person skilled in the art. Further, although all aspects of the invention preferably "comprise" the features described in relation to that aspect, it is specifically envisaged that they may "consist" or "consist essentially" of those features outlined in the claims.

Unless otherwise stated all percentages appearing in the specification are percentages by weight of the composition being described. In addition, unless otherwise stated, all numerical values appearing in this application are to be understood as being modified by the term "about".

### Brief description of the drawings

In order that the present invention may be more readily understood, it will be described further with reference to the figures and to the specific examples hereinafter.
Figure 1 is a flow diagram illustrating a processing unit incorporating the conditioning cell in accordance with the invention;
Figure 2 is a flow diagram illustrating in more detail the conditioning unit of the invention;
Figure 3 is a flow diagram illustrating the integration of the processing unit of Figure 1 into a production plant for use in greenhouse gas sequestration; and
Figure 4 is a graphical comparison of pH change of artificial seawater in the processing unit described herein over a range of currents applied across the separation cell, at a GHG feed rate of 2.7 L/min, main stream feed rate of 100 L/hr, and a blending rate of 60 L/hr. The GHG's were introduced at a current of 5 Amps. The upper line represents experimental observation using the processing unit of the invention and the lower line the calculated pH based upon laboratory tests.

### Description

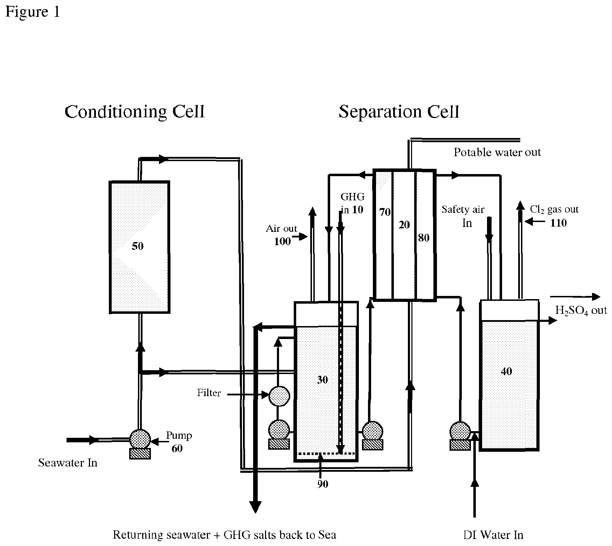

Figure 1 is a flow diagram showing a processing unit 10. The processing unit 10 includes an electrochemical separation cell 20, cathodic reaction cell 30, anodic reaction cell 40 and conditioning cell 50. The processing unit 10 illustrated is configured for GHG sequestration and desalination of sea water.

In this example sea water enters the processing unit 10 as a single stream and passes through a pump 60. The sea water is then split into two streams, a main stream (70% of the sea water) and a secondary stream (30% of the sea water). The main stream is passed through the conditioning cell 50 to neutralise any organic and biological media, and then into the separation cell 20.

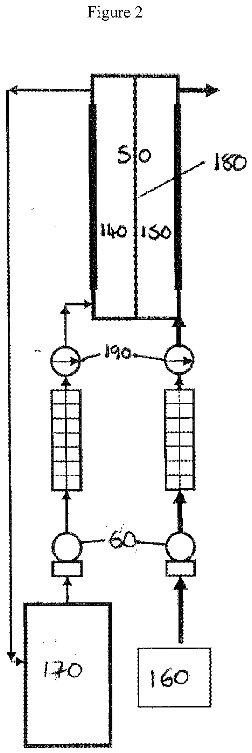

Conditioning cell 50 of this example is a two-compartment cell comprising an anodic compartment 140 separated from a cathodic compartment 150 by a cation selective membrane 180 (Figure 2). In this example the anodic compartment 140 contains sulfuric acid which is circulated through the cell from acid tank 170 by pump 60, flow rate is controlled using flow meter 190.

Water enters the conditioning cell 50 via the cathodic compartment 150 where it is neutralised by hydrogen ions which have passed through cationic membrane 180 upon the application of a 0.5 Amp DC current and 10 V. The DC current applied is constant and application of the current is continuous for the time that the conditioning cell is in use. The rate of water flow, and the flow itself are controlled using pump 60 and flow meter 190.

In this example, the secondary stream is filtered (filter not shown) prior to passing into the cathodic reaction cell 40.

In this example the physical dimensions of the separation cell are 45cm x 37cm x 2.2cm (width x height x depth). The anodic reaction cell, cathodic reaction cell and conditioning cell in this example are of the same dimensions which are 45cm x 37cm x 1.7cm (width x height x depth).

The water from the main stream forms a first aqueous solution in the separation cell 20, the first aqueous solution is electrolysed using a DC current of 25 Amp/hr producing cathodic reaction products (cations) and anodic reaction products (anions) which migrate towards the cathode and anode (not shown) respectively. This migration causes the cathodic reaction products to pass through a cation selective membrane 70 and into the cathodic reaction cell 30, and the anodic reaction products to pass through an anion selective membrane 80 and into the anodic reaction cell 40. The first aqueous solution is thus depleted of ions, and, in this embodiment, is released from the separation cell 20 as potable water.

In the cathodic reaction cell 30, the cathodic reaction products form a second aqueous solution with the water of the secondary stream. The cathodic reaction cell 30 comprises a cathode and an anode (not shown). A gas stream containing GHG's is pumped into the cathodic reaction cell where, in this configuration, they are micronised by passing through a fine mesh grid 90 (10-20 micron pores) positioned at the base of the cathodic reaction cell 30. In this example the GHG's are CO₂, SO₂ and N₂O. The GHG's then dissolve in the secondary aqueous solution and salt formation occurs. Unreacted gases (such as nitrogen) pass through the solution as bubbles and exit the cathodic reaction cell 30 through a gas outlet 100.

In this example, water is also returned from the cathodic reaction cell 30 to the separation cell 20. This is advantageous as such water contains acids formed by the dissolution of greenhouse gases but is substantially free from metal ions as these have formed salts and been discharged. These acids will then be recycled to the cathode reaction cell where they are mixed with further GHG's for sequestration and water from the secondary reaction stream.

The anodic products of reaction migrate to the anodic reaction cell 40. In this example these include chloride and sulfate. The chloride in this example begins to form at the anode of the separation cell 20, however, most of the chloride forms chlorine gas in the anodic reaction cell 40. Chlorine gas forms in the anodic reaction cell 40 as a result of the presence of the third aqueous solution, which in this embodiment is deionised water acidified with sulfuric acid to pH 3-4. Contact of the chlorine with the acid neutralises the chloride anion and causes formation of the chlorine gas molecule. The chlorine gas then comes out of solution and exits the anodic reaction cell 40 through a gas outlet 110. After collection the chlorine is dried by bubbling through sulphuric acid and compressed.

The sulfates are neutralised on the anode of the separation cell 20. After transfer to the anodic reaction cell 40 any remaining sulfate anions are converted into sulfuric acid and released from the processing unit 10. The pH of this solution is around 1 or 2. After release from the processing unit 10, the sulfuric acid is concentrated using distillation methods, in this example the water removed during concentration is recycled as the deionised water forming the third aqueous solution. Overall, acid concentration is controlled in this example by removal of the third aqueous solution from the anodic reaction cell using a pump and feed system returning the ions to the separation cell. This method may be applied generally.

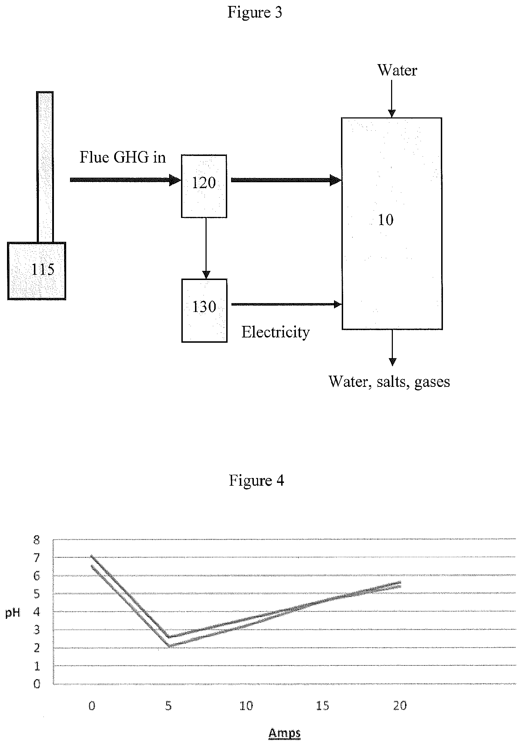

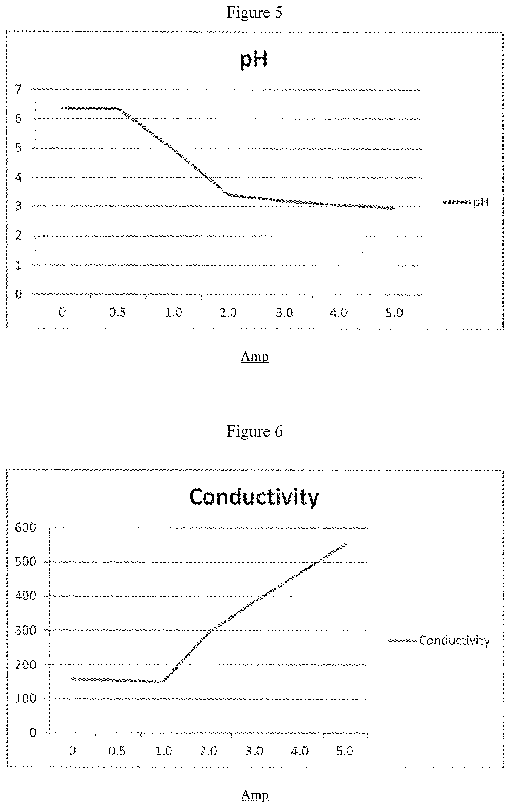

Figure 3 shows the integration of the processing unit 10 of Figure 1 into an electricity or other production plant, such as a heavy chemical production plant. The processing unit 10 of the invention is connected to the GHG flue 115 via a heat exchanger 120, which cools the gases, provides a source of heat for distillation/concentration of the collected sulfuric acid and runs a steam turbine 130 converting the heat into electricity which can be used to power the pumps and electrolytic processes described herein. By harvesting the by-products of the production plants processes in this way, the processing unit 10 can be configured to require little or no additional power, minimising the running costs of the unit and the environmental impact of the product.

### Examples

### Example 1

This test of the conditioning cell was intended to illustrate the ability of the conditioning cell to remove biological media from water. Current performance, and the accessibility of treating or removing masked metals from the water were also monitored.

### Method:

Waste water discharge at a salmon farming facility in the Highlands of Scotland was filtered (50 micron filter) and then passed through the conditioning cell of the invention and the processing unit. The waste water discharge contained all biological effluent of the fish fry including excrement and urine as well as fermented extra food and dead fry. Currents and voltages in the conditioning cell and separation cell were constant and the separation cell included cation and anion selective membranes. The system was allowed to stabilise, one hour after stabilisation samples were collected for analysis.

At start of the test the conductivity of the treated water was monitored with increasing current. A conductivity 'v' current curve was constructed. This allowed simple determination of the correct density, as this falls at the lowest conductivity and or turbidity reading beyond which conductivity starts to increase.

In Examples 1 and 2 and the Comparative Example, all untreated and treated waste waters were analysed at BRISTOL WATER Laboratories [Cordon Sanitair], PO Box 218, Bridgwater Road, Bedminster, Bristol BS99 7AU.

### System Parameters:

| | |
|---|---|
| Conditioning Cell volume | = 250 cm² |
| Separation Cell volume | = 1660 cm² |
| Water feed rate | = 50 L/hr |
| Catalyte and Analyte flow rates | = 50 L /hr |
| Catalyte Filter flow | = 100 L /hr |
| Catalyte and Analyte Tank flow | = 25 L |
| Conditioning cell DC Current | = 0.5 Amp/hr and 10.4 Volt |
| Separation cell DC Current | = 2.0 Amp/hr and 13.8 Volt |
| Stabilisation time | = 40 minutes |

The results are shown in Table 1

**Table 1: Removal of ammonium ions and iron from water**

| **Component** | **Max Limit** | **Untreated water*** | **Treated waste water^{#}** | **Average Removal (%)** |
|---|---|---|---|---|
| NH₄ | 0.50 | 15.85 mg/L | < 0.023 | 99.63 |
| Iron | 200 | 372.0 µg/L | 19.0 | 96.95 |

| | | | | |
|---|---|---|---|---|
| * Currents for the separation and conditioning cell = 0.0 Amp/hr # Power for separation cell = 27.6 W/hr and conditioning cell = 5.2 W/hr | | | | |

With the conditioning cell at 0.5 Amp /hr and separation cell at 2 Amp/hr, the system was completely stable, there was no change in either separation cell current or voltage for 10 hours. Examination of the cation and anion membranes after use showed these to be completely clean with no precipitation or fouling at all.

Accordingly it was found that the negatively charged organic media did not clog the anode membrane, the anode membrane was completely clean and anions and cations were extracted from first aqueous solution. The organic media was completely neutralised and all cationic species [mainly iron and ammonia] were available for separation.

### Comparative Example

This example repeated the process of Example 1 but in the absence of a conditioning cell. System parameters were as for Example 1.

It was found that within 30 minutes of operation the separation cell voltage increased to 50 Volt, and the water feed rate in the cathodic reaction cell was reduced to 15 L/hr. At this point the trial was stopped.

The separation cell was opened and examination of the membranes showed the formation of dark brown gelatinous layer on the anion selective membrane: the cation selective membrane was clean. No metal ions or other elements were extracted from the first aqueous solution.

Accordingly, in the absence of the conditioning cell the negatively charged organic media gradually clogged the anode membrane completely. Whilst the cation selective membrane remained clean, no cations were extracted from the first aqueous solution. Subsequent analysis of the samples indicated the presence of a high concentration of iron. Without being bound by theory it is believed that the presence of the organic media had blinded the cell to all cationic species [mainly iron and ammonia], which were masked or blocked completely.

### Example 2

In this example the upper limits for current passage through the conditioning cell were tested.

System parameters and experimental configuration were as for Example 1, with the exception that the current passed through the conditioning cell was set in each of four tests at 0, 1, 2 and 3 Amp/hr. The testing method was sequential in that after stabilisation and testing at 0 Amp/hr for 2 hours, the current was increased to 1 Amp/hr for stabilisation and then a 2 hour test, 2 Amp/hr for stabilisation and then a 2 hour test and finally 3 amp/hr for stabilisation and then a 2 hour test before discontinuing the experiment.

The results are shown in Table 2.

**Table 2: Effect of current on conductivity, chloride concentration and turbidity**

| **Power Applied across Conditioning Cell** | | | | | | | |
|---|---|---|---|---|---|---|---|
| | 0.0 A | 0.5 A | 1.0 A | 2.0 A | 3.0 A | 4.0 A | 5.0 A |
| **pH** | 6.37 | 6.35 | 4.69 | 3.42 | 3.2 | 3.07 | 2.98 |
| **Turbidity 4.0 NTUs** | 13.60 | | 0.66 | 0.83 | 0.87 | | |
| **Conductivity (µs/cm)** | 158 | 155 | 150 | 293 | 385 | 470 | 552 |
| **TSS 5.12 mg/L** | 17.408 | | 0.845 | 1.06 | 1.10 | | |

With the conditioning cell at 1, 2 or 3 Amp/hr and the separation cell at 2 Amp/hr for 2 hours for each test, before changing to higher Amp, the system was completely stable, there was no unexpected change in either separation cell current or voltage for the duration. The separation cell was dismantled and both cation and anion membranes were examined and were found to be completely clean, with no precipitation or fouling.

Accordingly, it has been found that, across a range of currents, the negatively charged organic media did not clog the anode membrane, indicating successful neutralisation of the media in the conditioning cell. the anode membrane was completely clean and cations were extracted from the first aqueous solution. Turbidity and conductivity were reduced at 1 Amp in the conditioning cell, although at higher currents hydrolysis and fragmentation of biological matter occurred forcing an increase in turbidity; however, this did not impair the functioning of the cell. It also became clear that at higher currents more chlorine ions were released from the organic media which resulted in an increase in conductivity within the cell. Again, this increase in conductivity did not impair the functioning of the cell.

It was found that varying the current of the conditioning cell at 1, 2, 3 Amp/hr but maintaining a constant current of 2 Amp/hr across the separation cell, resulted in a system that was completely stable, there was no change in either separation cell current or voltage, clearly showing that the conditioning cells can be used successfully in combination with the processing units described.

### Example 3

This test of the processing unit illustrates the ability of the separation cell to extract ions from the first aqueous solution, and shows the levels of ions often available as products of reaction.

### Method:

Artificial sea water was prepared by dissolving commercial sea salt in Bristol tap water at a concentration of 1362.5 g / 1000 L. The mixture was allowed to equilibrate over 8 days with stirring for approximately 2 hours daily to mature and rebalance the seawater with surrounding atmosphere. Simulated seawater was fed through the system as in the experimental set parameters.

A pure micronized stream of CO₂ gas (from BOC) was prepared by pumping the CO₂ through a 10 - 20 micron micro mash (pores) grid of ~ 900 cm². The grid was positioned 5 cm above the cathodic reaction cell.

### Base was passed through the simulated secondary sea water stream (cathodic reaction cell) until the pH dropped from 7.25 to pH 4.7. The simulated seawater saturated with CO₂ was pumped through the cathode compartment in the separation cell of the processing unit. Under the influence of DC current, cationic species from main feed stream migrated through the cationic selective membrane neutralising the acids in the cathodic reaction cell (carbonic acid) formed by CO₂ forming a balanced mixture of carbonated and bi-carbonated metal species. By applying DC current to allow the pH to increase to less than pH 10.25, in this case to pH of up to ~ 8.3. The equilibrium balance between CO₃ and HCO₃ species at this pH was maintained.

Data was collected at 0.5 hour intervals to evaluate system stabilisation.

### System Parameters:

| | |
|---|---|
| Separation Cell DC current | = 15 Amp/hr |
| Rate of Simulated sea water feed in | = 100L/hr |
| Carrier simulated sea water in | = 40L/hr |
| Carrier simulated sea water return | = 40L/hr |
| Total active surface area separation cell | = 3330 cm² |
| Micronized GHG CO₂ feed rate at | |
| 1m long pathway | = 120 L/hr |
| Conditioning cell DC current | = 1 Amp/hr |

The results of the electrochemical separation of the first aqueous solution are shown in Table 3.

**Table 3: Results after 2.0 hours***

| **Element** | **Level in Main Stream (mg/hr)** | **Level released from processing unit via separation cell (mg/hr)** | **Reduction in Main Stream ion level (15 Amp mg/hr)** | **Additional ions sourced from second or third aqueous solutions (mg/hr)** | **Total (mg/hr)** |
|---|---|---|---|---|---|
| Na extracted from first aqueous solution | 61900 | 39300 | 22600 | 24760 (from second aqueous solution/cathod ic reaction cell) | 47360 |
| Ca extracted from first aqueous solution | 10800 | 8200 | 2600 | 4320 (from second aqueous solution/cathod ic reaction cell) | 6920 |
| K extracted from first aqueous solution | 331 | 200 | 131 | 132.4 (from second aqueous solution/cathod ic reaction cell) | 264.4 |
| Cl extracted from first aqueous solution | 77500 | 63400 | 14100 | 31000 (from third aqueous solution/anodic reaction cell) | 45100 (as chlorine gas) |
| SO₄ extracted from first aqueous solution | 3490 | 3150 | 340 | 1396 (from third aqueous solution/anodic reaction cell) | 1736 (as H₂SO₄) |
| pH | 7.10 | 6.18 | | | |
| Conductivity | 2610 | 2060 | | | |
| Alkalinity as CaCO₃ | 230 | 112 | | | |
| Alkalinity as HCO₃ | 281 | 137 | | | |

| | | | | | |
|---|---|---|---|---|---|
| *All analysis was carried out at Gordon Sanitair laboratories in Bristol | | | | | |

In this trial the released water was analysed for major elements. The sodium, potassium and calcium represent the carbonate and bi-carbonate as well as sulphates salts. The reduction in main stream ion level in terms of extracted sodium, potassium and calcium neutralised the GHG forming its salts in the second aqueous solution and which may be released from the processing unit. Na, P, Mg and Ca soluble salts of HCO₃, CO₃, Cl, SO₄ xH₂O may be formed in various combinations.

The extracted sulphate and chlorine ions were neutralised to sulphuric acid and chlorine gas in the anodic reaction cell if not directly at the anode in the separation cell. No CO₂ evolved from the exit cathode tank chimney flow meter, indicating complete capture of the GHG.

As can be seen from the results above, a variety of products are produced in the processing unit of the invention. In particular, anionic species migrate under the influence of the DC current to the anodic reaction cell. In this test the sulphate ions were converted to sulphuric acid, concentrated and removed to promote further sulfate migration to the anodic reaction cell. The chlorine ions migrated into the acidic medium of the anodic reaction cell, and were neutralised forming chlorine gas which evolved out of the system. In this test the chlorine gas was dried and compressed in chlorine cylinders.

In this test the amount of chlorine and sulfate harvested in the anodic reaction cell corresponds to the reduction in chlorine and sulfate observed in the first aqueous solution, making it clear that the chlorine and sulfate have been obtained from this source. The amount of any of these products produced is dependent on the specific operation current density and basicity.

The quality and purity of the products of the process claimed, in particular the sulphuric acid, is dependent on the presence and concentration of other anionic species in the master feed brackish or seawater being used in processing unit of the invention.

### Example 4

The GHG sequestration and desalination abilities of the processing unit were tested using carbon dioxide, sulfur dioxide, nitrates and nitrous oxide.

Artificial sea water was prepared as in Example 3, and the test method was as set out in that example. The system parameters were as follows:

| | |
|---|---|
| Separation Cell DC current | = 5, 10, 15, 20 & 25 A/hr |
| Rate of Simulated sea water feed in main stream | = 100L/hr |
| Carrier simulated sea water in | = 60L/hr |
| Carrier simulated sea water return | = 60L/hr |
| Total active surface area separation cell | = 3330 cm² |
| Micronized GHG feed rate at 1m long pathway | = 162 L /hr |
| Conditioning cell DC current | = 1 Amp/hr |

The results are shown in Tables 4, 5 and in Figure 4.

**Table 4: Production of Potable Water using the Processing unit of the invention. ***

| **Description** | **Main Stream of Artificial Seawater† (mg/L)** | **First Aqueous solution released from Separation Cell^{§} (mg/L)** | **Resulting Potable Water# (mg/L)** |
|---|---|---|---|
| Alkalinity as CaCO₃ | 230 | 336 | 13 |
| Alkalinity as CaHCO₃ | 281 | 410 | 15 |
| Calcium | 108 | 130 | 70 |
| Chloride | 775 | 765 | 591 |
| Magnesium | 9.44 | 13.0 | 6.7 |
| Potassium | 3.31 | 5.25 | 1.4 |
| Sodium | 519 | 684 | 337 |
| Sulphate | 34.9 | 245.0 | 30 |
| Nitrogen Formula | 0.461 | 0.477 | 0.361 |

| | | | |
|---|---|---|---|
| *Separation Cell at 25 Amp DC current & GHGs feed rate at of 2.7 L/min † 100 litre volume § 25 Amps and flow rate of 60L/hr # 25 Amps and flow rate of 100L/hr | | | |

The test showed that GHG's could be captured and removed from a gas stream. Hydrogen gas was also generated.

The sequestration of the nitrogen formula were observed as following the electrochemical processes below. Specifically, NOx in the cathodic reaction cell were reduced to nitrogen and oxygen under alkaline reduction conditions:

Nitrates: NO₃⁻ + 3H₂O +5e⁻ → ½ N₂ + 9OH⁻ or 2NaNO₃ → 2Na⁺+N₂ +3O₂+ 2e⁻

Nitrogen Formula: N_{y} Oₓ + aH₂O + be⁻ → cN₂ + dO₂

where x, y, a, b, c and d are balancing numerals

**Table 5: Nitrates & Nitrogen Formula Reduction in Separation Cell**

| **Function** | **Seawater* (mg/L)** | **Resulting Potable / Brackish water* (mg/L)** | **Theoretical Seawater out§ (mg/L)** | **Actual Seawater§ (mg/L)** |
|---|---|---|---|---|
| At 20 Amp | **23 / 0.461** | **18 / 0.362** | **31.333 / 16.961** | **24.4 / 0.489** |
| Total mg/100L | **2300 / 46.1** | **1800/36.2** | | |
| **Loss mg/100L** | | **-500 / -990** | | |
| At 15 Amp | **23 / 0.461** | **19.9 / 0.399** | **28.167 / 00.666** | **22.9 / 0.459** |
| Total mg/100L | **2300 / 46.1** | **1990 / 39.0** | | |
| **Loss mg/100L** | | **-310/-12.3** | | |

| | | | | |
|---|---|---|---|---|
| * Flow rate of 100 L/hr; first and second values represent the levels of nitrates (first) and nitrogen formula (second) - **Nitrates/N₂ formula** § Flow rate of 60 L/hr; first and second values represent the levels of nitrates (first) and nitrogen formula (second) - **Nitrates/N₂ formula** | | | | |

From the above it can be seen that at 20 Amps the rate of nitrate destruction is 22.13%, and the rate of nitrogen formula destruction is 97.12 %. At 15 Amps, the rate of nitrate destruction is 18.70% and the rate of nitrogen formula destruction is 31.11%

Modulation of the electrical current was shown to govern the pH of the effluent seawater (Figure 4) and to confirm that no precipitates were formed (which poses a mechanical problem in known carbon capture reactors). All of these results were conclusively demonstrated. Details of key observations and results are described below:
- **Removal of greenhouse gases:** The experiments were conducted for ca 40 minutes per run, with an influx of GHGs of 2.7 L/min (in approximate ratios of 1 N₂O to 2 SO₂ to 7 CO₂); thus, ca 162 L/hr of GHGs were introduced to the GHG reaction tank; no gas bubbles could be observed exiting the GHG reaction tank at any point during the experiment, indicating that that GHGs had been dissolved into the seawater.
- **Generation of seawater return:** In all experiments, the pH of the seawater return was initially decreased at the beginning of the experiment, providing direct confirmation that the GHGs were being dissolved into the seawater similarly the conductivity increased due to concentration of salts into the seawater return.
- **Modulation of pH:** Four experiments were conducted, by applying 5, 15, 20 or 25 amps through the catalysis cell. Increasing the voltage dramatically increased the pH (lowered the acidity) of the seawater return, demonstrating that modulation of the electrical current, especially in tandem with modulation of the water and GHG flow, can be used to control the acidity of effluent water (Figure 4). From Figure 4 it is clear that the observed change in pH in the field test closely correlates with the change in pH observed under laboratory conditions.
- **Generation of potable water:** The nominally potable water stream had a markedly lower conductivity (salinity) than the seawater input. It was demonstrated that this could be modulated downward by changing the voltage applied to the catalysis cell.
- **Generation of H₂:** Despite no gas bubbles flowing into the catalysis cell, a significant number of gas bubbles were generated within it and flowed out of it. These bubbles are almost certainly H₂ gas, based on the electrochemistry occurring and consistent with this, H₂ was detected in the seawater effluent.
- A Separation cell DC current consumption for 100L seawater was observed to be 650 Watt/hour
- The Conditioning cell DC current consumption for 100L seawater was observed to be 3.90 Watt/hour
- A seawater return (discharge of secondary aqueous solution) of 60 L/hr was observed
- Approximate average weight of 1L of GHG was found to be 2.067 g
- GHG feed at of 2.7 L/min per 40 min = 2.7 L x 40 min x 2.067 g = 223.24 g
- Sodium and chlorine concentrations in produced Potable Water were, in this example higher than regulation. As such, the "potable" water produced in this experiment would be classified as brackish water, suitable for discharge into a water course, but not for drinking without further refinement. Simple increase of the current applied to the separation cell would remove a higher level of sodium and chloride ions. Calcium, magnesium and potassium concentration were within the legal requirement.
- At 25 Amp/hr the processing unit had successfully absorbed 162 L of GHG [223.24 g].
- The pH of effluent return seawater increased with increase of the separation cell current.
- The nitrogen containing compounds introduced to the cathodic reaction cell were reduced to nitrogen and oxygen.

### Example 5

The GHG sequestration and desalination abilities of the processing unit were tested using the flue gases from the boilers of Bristol Royal Infirmary.

Flue gases from Bristol Royal Infirmary (BRI) boilers were collected from near the base of the flue chimney, cooled through an heat exchanger/fans then pumped into the processing unit of the invention.

Bristol Royal Infirmary used cation and anion de-salination resin columns to produce the deionized water necessary for their boiler system. The waste eluent from the desalination resin plant was collected and used as a supply source ion-containing water for use in the main and secondary streams (first and second aqueous solutions). The desalination system concentrates, TDS averaged 3950 mg/L.

The results were assessed by Catalyst Environmental Ltd.

### System Parameters:

| | |
|---|---|
| Separation Cell DC current Density | = 78Amp |
| Rate of Simulated sea water feed in | = 100L/hr |
| Carrier simulated sea water in | = 60L/hr |
| Carrier simulated sea water return | = 60L/hr |
| Total active surface area separation cell | = 3330 cm² |
| Un-micronized GHG gases feed rate at 1m long pathway | = 720 L/hr |
| Conditioning cell DC current | = 1 Amp/hr |

Table 6 below summarises the results obtained when testing the concentrations of certain pollutants in the emissions from the Boiler at Bristol Royal Infirmary, both before (Inlet) and after (Outlet) passage through the processing unit.

The purpose of the tests was to demonstrate the levels of reduction in the concentrations of certain pollutants that the processing unit could achieve.

**Table 6: Comparison of emission concentrations measured before (Inlet) and after (Outlet)**

| **Parameter /Time** | **NOx (g/m³) Inlet** | **NOx (g/m³) Outlet** | **Reduction** | **CO (mg/m³) Inlet** | **CO (mg/m³) Outlet** | **Reduction** |
|---|---|---|---|---|---|---|
| Run 1 (10:25 - 1:35) | 21.4 | 1.8 | 92% | 4.3 | 1.8 | 58% |
| Run 2 (11:50 - 3:10) | 20.0 | 1.7 | 92% | 2.8 | 2.7 | 4% |
| Run 3 (13:50 - 4:45) | 35.2 | 3.0 | 91% | 4.3 | 2.0 | 53% |
| Run 4 (14:55 - 6:25) | 32.3 | 3.0 | 91% | 3.3 | 2.5 | 24% |
| **Average** | **27.2** | **2.4** | **91%** | **3.7** | **2.3** | **39%** |
| **Parameter /Time** | **CO₂ (g/m³) Inlet** | **CO₂ (g/m³) Outlet** | **Reduction** | **SO₂ (mg/m³) Inlet** | **SO₂ (mg/m³) Outlet** | **Reduction** |
| Run 1 (10:25 - 1:35) | 32271 | 5469 | 83% | - | - | - |
| Run 2 (11:50 - 3:10) | 189164 | 19541 | 90% | - | - | - |
| Run 3 (13:50 - 4:45) | 43255 | 6793 | 84% | 8.2 | 3.4 | 59% |
| Run 4 (14:55 - 6:25) | 146414 | 15979 | 89% | 6.9 | 3.4 | 51% |
| **Average** | **102776** | **11946** | **88%** | **7.6** | **3.4** | **55%** |

As can be seen, both the NOx and CO₂ concentrations were lower after the flue gas had been passed through the processing unit by an average of 91% and 88% respectively.

It was also observed that:
- the discharged water had a pH of 8.4;
- at 0.25 to 1.0 cm height GHG bubbles, a cathodic reaction cell of 2.5 meters diameter was required to affect a complete sequestration of approximately 100 % of un-micronized GHG in the flue gases to air mixture which incorporated approximately 7 to 10 times air in the boiler Furness;
- no precipitation was observed in separation cell, the cathodic reaction cell or in the water discharged from the processing unit;
- after 2 hours operation the operating voltage dropped gradually from 19 to 14 indicating healthy electro separation and GHG combination flow;
- the current consumption was 1092 Watt/hour in the separation cell.
- the current consumption was 3.9 Watt/hour in the conditioning cell.

## Claims

1. A processing unit comprising:
a conditioning cell (50) for treating water containing organic media;
an electrochemical separation cell (20);
a cathodic reaction cell (30) in fluid communication with the separation cell; and
an anodic reaction cell (40) in fluid communication with the separation cell; wherein the conditioning cell comprises:
a cathodic compartment (150) comprising a cathode; and
an anodic compartment (140) comprising an anode separated from the first cathodic compartment by a cation selective membrane (180);
wherein in use, the anodic compartment comprises an acid, and the cathodic compartment comprises water, the water comprising organic media;
wherein the separation cell (20) is configured to receive an ion-containing first aqueous solution formed from water, which is first passed through the cathodic compartment of the conditioning cell;
wherein the separation cell further comprises a cation (70) and an anion (80) selective membrane arranged proximal the cathode and the anode, each forming a permeable wall spanning the separation cell, so that in use only the ion to which the membrane is permeable may pass beyond that point within the cell, so to ensure that the cathodic and anodic products of electrolysis do not recombine and to concentrate them facilitating transfer to the cathodic (30) and anodic (40) reaction cells;
and
wherein in use the organic media is living or dead biological matter, **characterised in that** the processing unit further comprises means for applying a current across the conditioning cell for neutralising the negative charges of the biological matter using the hydrogen ions which migrate from the anodic compartment to the cathodic compartment of the conditioning cell.

2. A processing unit according to claim 1 wherein the source is sea water.

3. A processing unit according to claims 1 or 2 wherein the ions of the first aqueous solution are selected from sodium, potassium, iron, calcium, magnesium, phosphorus, cyanide, carbonate, chloride, sulfate, sulfite, nitrate, and nitrite.

4. A method of water processing comprising the steps of:
(a) providing a conditioning cell according to any of claims 1 to 3,
(b) applying a current across the cell,
(c) neutralising organic media using cations which migrate from the anodic compartment (140) to the cathodic compartment (150), wherein the cations comprise hydrogen ions,
(d) conditioning an ion-containing first aqueous solution,
(e) providing the first aqueous solution in an electrochemical separation cell (10), (f) separating the ions into cathodic and anodic products using electrolysis,
(g) transferring the cathodic products to the cathodic reaction cell (30) and the anodic products to the anodic reaction cell (40),
(h) contacting the cathodic products of electrochemical separation of the first aqueous solution with water to form a second aqueous solution and salts of the cathodic products,
(i) contacting the anodic products of electrochemical separation of the first aqueous solution with water to form a third aqueous solution,
(j) releasing the treated first aqueous solution from the processing unit,
(k) releasing the second aqueous solution and salts of the cathodic products from the processing unit, and
(l) releasing the third aqueous solution from the processing unit.

## Patentansprüche

1. Behandlungseinheit, umfassend:
eine Aufbereitungszelle (50) zur Behandlung von Wasser, das organische Medien enthält,
eine elektrochemische Trennzelle (20),
eine kathodische Reaktionszelle (30) in Fluidverbindung mit der Trennzelle und
eine anodische Reaktionszelle (40) in Fluidverbindung mit der Trennzelle, wobei die Aufbereitungszelle umfasst:
eine Kathodenkammer (150) mit einer Kathode und
eine Anodenkammer (140) mit einer Anode, die von der ersten Kathodenkammer durch eine kationenselektive Membran (180) getrennt ist,
wobei im Gebrauch die Anodenkammer eine Säure enthält und die Kathodenkammer Wasser enthält, wobei das Wasser organische Medien enthält,
wobei die Trennzelle (20) zum Aufnehmen einer ionenhaltigen ersten wässrigen Lösung eingerichtet ist, die aus Wasser gebildet wurde, das zunächst durch die Kathodenkammer der Aufbereitungszelle geleitet wurde,
wobei die Trennzelle ferner eine kationenselektive (70) und eine anionenselektive (80) Membran umfasst, die in der Nähe der Kathode und der Anode angeordnet sind und jeweils eine durchlässige, die Trennzelle überspannende Wand bilden, so dass im Gebrauch nur das Ion, für das die Membran durchlässig ist, über diesen Punkt innerhalb der Zelle hinausgehen kann, um sicherzustellen, dass die kathodischen und anodischen Produkte der Elektrolyse sich nicht wieder vermischen, und um sie zu konzentrieren, was den Transfer zu den kathodischen (30) und anodischen (40) Reaktionszellen erleichtert,
und wobei im Gebrauch die organischen Medien lebendes oder totes biologisches Material sind,
**dadurch gekennzeichnet, dass** die Behandlungseinheit ferner Mittel zum Anlegen eines Stroms durch die Aufbereitungszelle umfasst, um die negativen Ladungen des biologischen Materials unter Verwendung der Wasserstoffionen zu neutralisieren, die von der Anodenkammer zur Kathodenkammer der Aufbereitungszelle wandern.

2. Behandlungseinheit nach Anspruch 1, wobei die Quelle Meerwasser ist.

3. Behandlungseinheit nach Anspruch 1 oder 2, wobei die Ionen der ersten wässrigen Lösung ausgewählt sind aus Natrium, Kalium, Eisen, Calcium, Magnesium, Phosphor, Cyanid, Carbonat, Chlorid, Sulfat, Sulfit, Nitrat und Nitrit ausgewählt sind.

4. Verfahren zur Wasseraufbereitung, das die folgenden Schritte umfasst:
(a) Bereitstellen einer Aufbereitungszelle nach einem der Ansprüche 1 bis 3,
(b) Anlegen eines Stroms an die Zelle,
(c) Neutralisieren von organischen Medien unter Verwendung von Kationen, die von der Anodenkammer (140) zur Kathodenkammer (150) wandern, wobei die Kationen Wasserstoffionen umfassen,
(d) Aufbereitung einer ionenhaltigen ersten wässrigen Lösung,
(e) Bereitstellen der ersten wässrigen Lösung in einer elektrochemischen Trennzelle (10),
(f) Trennen der Ionen in kathodische und anodische Produkte mittels Elektrolyse,
(g) Überführen der kathodischen Produkte in die kathodische Reaktionszelle (30) und der anodischen Produkte in die anodische Reaktionszelle (40),
(h) Inkontaktbringen der kathodischen Produkte der elektrochemischen Trennung der ersten wässrigen Lösung mit Wasser zur Bildung einer zweiten wässrige Lösung und von Salzen der kathodischen Produkte,
(i) Inkontaktbringen der anodischen Produkte der elektrochemischen Trennung der ersten wässrigen Lösung mit Wasser zur Bildung einer dritten wässrigen Lösung,
(j) Freisetzen der behandelten ersten wässrigen Lösung aus der Behandlungseinheit,
(k) Freisetzen der zweiten wässrigen Lösung und der Salze der kathodischen Produkte aus der Behandlungseinheit und
(l) Freisetzen der dritten wässrigen Lösung aus der Behandlungseinheit.

## Revendications

1. Unité de traitement comprenant :
- une cellule de conditionnement (50) pour traiter de l'eau contenant des milieux organiques,
- une cellule de séparation électrochimique (20),
- une cellule de réaction cathodique (30) en liaison fluidique avec la cellule de séparation, et
- une cellule de réaction anodique (40) en liaison fluidique avec la cellule de séparation,
la cellule de conditionnement comprenant :
- un compartiment cathodique (150) avec une cathode,
- un compartiment anodique (140) avec une anode, séparé du premier compartiment cathodique par une membrane sélective de cation (180),
- en fonctionnement, le compartiment cathodique contient un acide et le compartiment cathodique contient de l'eau, l'eau contenant des milieux organiques,
- la cellule de séparation (20) est configurée pour recevoir une première solution contenant des ions, provenant de l'eau qui a traversé le compartiment cathodique de la cellule de conditionnement,
- la cellule de séparation comprend en outre une membrane sélective de cations (70) et d'anions (80), à proximité de la cathode et de l'anode, chacune constituant une paroi perméable couvrant la cellule de séparation de façon qu'en fonctionnement, seuls les ions pour lesquels la cellule est perméable peuvent passer au-delà de cet endroit de la cellule de façon à garantir que les produits cathodiques et anodiques de l'électrolyse ne se recombinent pas et pour les concentrer pour faciliter le transfert vers les cellules de réaction cathodique (30) et anodique (40), et
- en fonctionnement, le milieu organique est une matière biologique vivante ou morte,
unité **caractérisée en ce qu'**elle comprend en outre
des moyens pour appliquer un courant électrique à la cellule de conditionnement pour neutraliser les charges négatives de la matière biologique en utilisant les ions hydrogène qui migrent du compartiment anodique vers le compartiment cathodique de la cellule de conditionnement.

2. Unité de traitement selon la revendication 1,
dans laquelle
la source est de l'eau de mer.

3. Unité de traitement selon la revendication 1 ou 2,
dans laquelle
les ions de la première solution aqueuse sont choisis parmi : sodium, potassium, fer, calcium, magnésium, phosphore, cyanure, carbonate, chlorures, sulfates, sulfites, nitrates et nitrites.

4. Procédé de traitement de l'eau comprenant les étapes consistant à :
(a) fournir une cellule de conditionnement selon l'une quelconque des revendications 1 à 3,
(b) appliquer un courant électrique à la cellule,
(c) neutraliser le milieu organique en utilisant des cations qui migrent du compartiment anodique (140) au compartiment cathodique (150), les anions comprenant des ions hydrogène,
(d) conditionner une première solution aqueuse contenant des ions,
(e) fournir la première solution aqueuse à une cellule de séparation électrochimique (10),
(f) séparer les ions en produits cathodiques et produits anodiques par électrolyse,
(g) transférer les produits cathodiques à la cellule de réaction cathodique (30) et les produits anodiques à la cellule de réaction anodique (40),
(h) mettre en contact les produits cathodiques de séparation électrochimique de la première solution aqueuse avec l'eau pour former une seconde solution aqueuse et des sels de produits cathodiques,
(i) mettre en contact les produits anodiques de la séparation électrochimique de la première solution aqueuse avec l'eau pour former une troisième solution aqueuse,
(j) évacuer la première solution aqueuse traitée de l'unité de traitement,
(k) évacuer la seconde solution aqueuse et les sels des produits cathodiques de l'unité de traitement, et
(l) évacuer la troisième solution aqueuse de l'unité de traitement.
